# EUROPEAN PATENT SPECIFICATION

(11) **EP 2 068 472 B1**
(45) Date of publication and mention of the grant of the patent: **09.11.2011**
(21) Application number: 07807576.9
(22) Date of filing: 19.09.2007
(51) Int. Cl.: H04L 5/00, H04W 72/04

(54) **COMMUNICATION SYSTEM, ITS BASE STATION, AND COMMUNICATION METHOD**
KOMMUNIKATIONSSYSTEM, BASISSTATION DAFÜR UND KOMMUNIKATIONSVERFAHREN
SYSTÈME DE COMMUNICATION, SA STATION DE BASE ET PROCÉDÉ DE COMMUNICATION

(30) Priority: 20.09.2006 JP 2006254386
(43) Date of publication of application: 10.06.2009
(73) Proprietor: Kyocera Corporation, Kyoto-shi, Kyoto-fu 612-8501 (JP)
(72) Inventor: TANIGAWA, Hironobu, Yokohama-shi, Kanagawa (JP); NAKAMURA, Yasuhiro, Yokohama-shi, Kanagawa (JP); TAKAMATSU, Nobuaki, Yokohama-shi, kanagawa (JP)
(74) Representative: Turner, Matthew Lawrence
(86) International application number: PCT/JP2007/068207
(87) International publication number: WO 2008/035716

(56) References cited:
- EP-A1- 1 361 769
- WO-A1-02/054809
- WO-A1-2007/108077
- JP-A- 2006 050 615
- JP-A- 2006 148 797
- JP-A- 2006 180 374
- JP-A- 2006 287 895
- JP-A- 2007 274 042
- US-A1- 2003 112 784
- US-A1- 2005 063 336

## Description

### Technical Field

The present invention relates to an OFDMA communication system, base station, and communication method.

### Background Art

As a wireless access scheme of a digital portable telephone system, a PHS system, etc., a TDMA (Time Division Multiple Access) and TDD (Time Division Duplex) scheme in which TDMA and TDD are combined has been adopted. Additionally, an OFDMA (Orthogonal Frequency Division Multiplexing Access) scheme using OFDM has been proposed.

The OFDM is a scheme for dividing a carrier to modulate data into a plurality of "subcarriers" (subdivided carriers) orthogonal to each other and distributing and transmitting a data signal in each subcarrier.

Hereinafter, the overview of the OFDM scheme will be described.

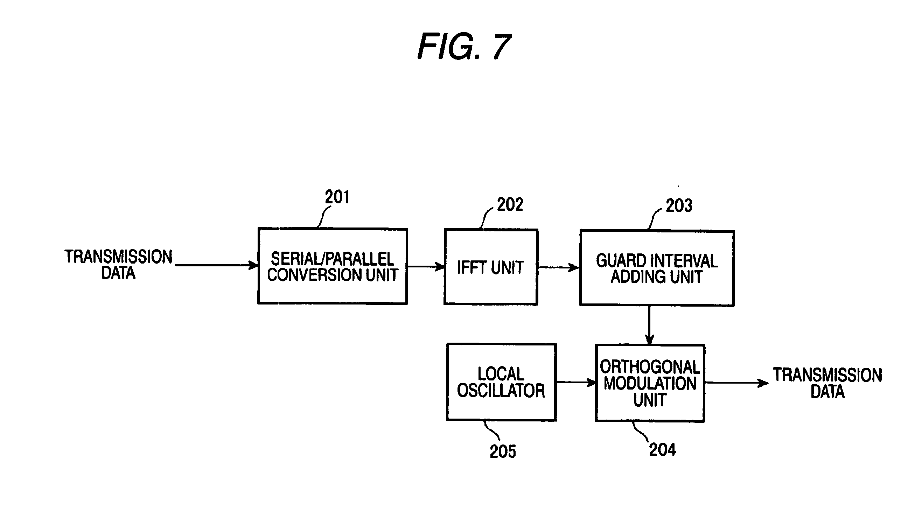

Fig. 7 is a block diagram showing a configuration of an OFDM modulation device to be used at a transmitting side. Transmission data is input to the OFDM modulation device. The transmission data is supplied to a serial/parallel conversion unit 201 and converted into data configured from a plurality of low-speed transmission symbols. That is, a plurality of low-speed digital signals are generated by dividing transmission information. Parallel data is supplied to an inverse fast Fourier transform (IFFT) unit 202.

The parallel data is allocated to each subcarrier configuring OFDM and mapped in a frequency domain. Here, each subcarrier is modulated by BPSK, QPSK, 16QAM, 64QAM, etc. The mapping data is transformed from frequency-domain transmission data to time-domain transmission data by performing an IFFT operation. Thereby, multicarrier modulation signals into which a plurality of subcarriers orthogonal to each other are modulated independently are generated. An output of the IFFT unit 202 is supplied to a guard interval adding unit 203.

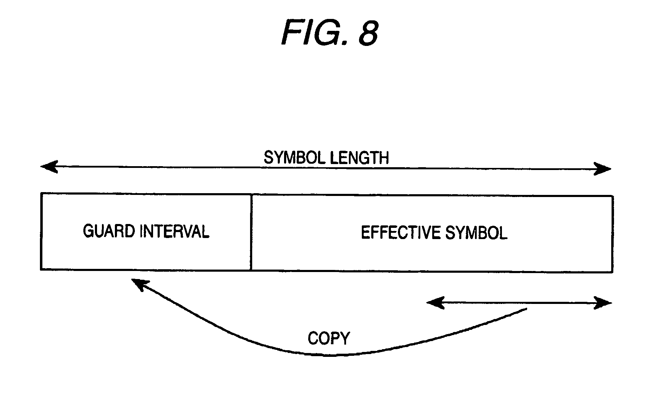

As shown in Fig. 8, the guard interval adding unit 203 sets a rear part of an effective symbol of transmission data as a guard interval and adds its copy to a front part of an effective symbol period for every transmission symbol. A base-band signal obtained by the guard interval adding unit is supplied to an orthogonal modulation unit 204.

The orthogonal modulation unit 204 orthogonally modulates a base-band OFDM signal supplied from the guard interval adding unit 203 using a carrier signal supplied from a local oscillator 105 of the OFDM modulation device, and performs frequency conversion into an intermediate frequency (IF) signal or a radio frequency (RF) signal. That is, after frequency-converting the base-band signal into a desired transmission frequency band, the orthogonal modulation unit outputs it to a transmission path.

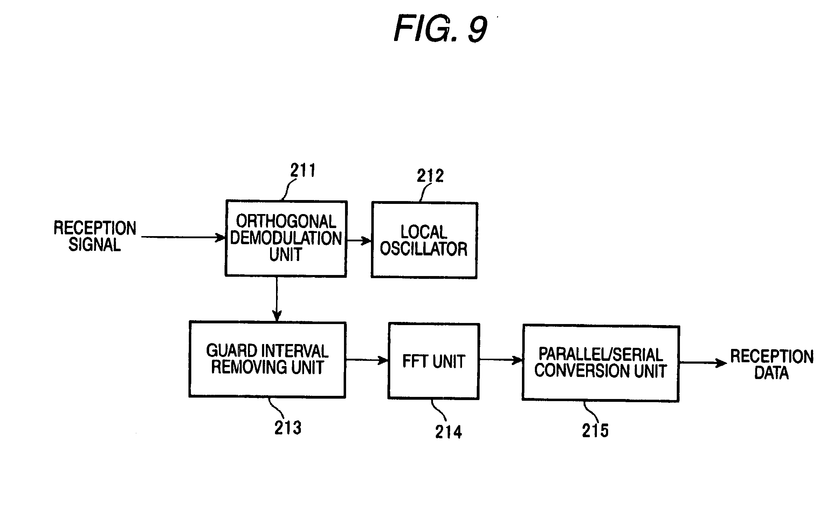

Fig. 9 is a block diagram showing a configuration of an OFDM demodulation device to be used at a receiving side. An OFDM signal generated by the OFDM modulation device of Fig. 7 is input to the OFDM demodulation device through a predetermined transmission path.

An OFDM reception signal input to the OFDM demodulation device is supplied to an orthogonal demodulation unit 211. The orthogonal demodulation unit 211 orthogonally demodulates the OFDM reception signal using a carrier signal supplied from a local oscillator 212 of the OFDM demodulation device, performs frequency conversion from an RF signal or an IF signal to a base-band signal, and obtains a base-band OFDM signal. The OFDM signal is supplied to a guard interval removing unit 213.

The guard interval removing unit 213 removes a signal added by the guard interval adding unit 203 of the OFDM modulation device according to a timing signal supplied from a symbol timing synchronizing unit (not shown). A signal obtained by the guard interval removing unit 213 is supplied to a fast Fourier transform (FFT) unit 214.

The. FFT unit 214 performs transformation to frequency-domain reception data by performing an FFT operation on input time-domain reception data. De-mapping is performed in the frequency domain and parallel data is generated for each subcarrier. Here, the demodulation to the modulation of BPSK, QPSK, 16QAM, 64QAM, etc. performed for each subcarrier is performed. Parallel data obtained by the FFT unit 214 is supplied to a parallel/serial conversion unit 215 and output as reception data.

Above-described, the OFDM is a scheme for dividing a carrier into a plurality of subcarriers. The OFDMA is a scheme for collecting and grouping a plurality of subcarriers among subcarriers in the above-described OFDM and performing multiplex communication by allocating one or more groups to each user. Each group described above is called a subchannel. That is, each user performs communication using one or more subchannels allocated. According to a communication data amount, a propagation environment, etc., subchannels are adaptively increased/decreased and allocated.

Patent Document 1 discloses a method for adaptively varying and allocating pilot carriers according to a channel environment of each subchannel. This allocation method allocates a small number of pilot carriers when the channel environment is good and allocates a large number of pilot carriers when the channel environment is bad. Thereby, the number of subchannels capable of being allocated to one user is varied.
Patent Document 1: JP-A-2005-520432
US 2003/0112784 discloses a method, system and program product for use on an integrated communications network. An RF spectrum allocation application/algorithm provides initial allocation of a percentage of available spectral resources to current voice and data traffic. Each allocated percentage is bounded by a sliding window, which adjusts its location based on the changing need for the resources. Thus, a voice sliding window dynamically adjusts its location to provide additional spectral resources to voice traffic when the voice traffic increases and provides less spectral resources when the voice traffic decreases. Likewise, a data sliding window dynamically adjusts its location to provide additional spectral resources to data traffic when the data traffic increases and provides less spectral resources when the data traffic decreases. The size of each window is determined by input parameters. When heavy voice and/or data traffic is present, the maximum available spectral resources are utilized and shared between both traffic types based on the RF spectrum allocation algorithm. Whenever an overlap in the windows occurs, the algorithm dynamically determines which of the traffic types to allocate the remaining spectral resources based on a number of factors, including the cost/financial factors and QoS and GoS calculations.
EP 1361769 discloses a system, method and computer program for dynamic frequency allocation for packet switched services in which radio channels used for packet switched services may be dynamically allocated to meet quality of service (QoS) requirements utilizing a dynamic frequency and channel allocation system. The achievable throughput is estimated in the available channels. Further, the user or application is able to specify the level of service desired and the system, method and computer program will select a channel assignment to meet the desired level of service. When the channels to be assigned have been selected, the system, method and computer program will evaluate if the new channel assignment will cause excessive interference to any other ongoing connection. In such case the ongoing connection will be re-assigned to another suitable radio channel.

### Disclosure of the Invention

### Problem that the Invention is to Solve

In the above-described art, a base station releases an unnecessary subchannel for another user terminal when transmission data is temporarily decreased while communication of a user terminal is in process.

When a transmission data amount of the user terminal has increased again, it must wait for a subchannel allocated for another user terminal to be released so as to re-use the released subchannel. At this time, since the number of available subchannels has decreased even when a communication data amount of the user terminal has increased again, there is a problem in that the communication throughput of the user terminal is not increased and a time is required until data transmission is completed.

When the subchannel is allocated, carrier sensing is required to pre-check whether or not the subchannel is available, Since carrier sensing is performed for all subchannels when a data amount is increased and a subchannel is newly allocated, its process is time-consuming. Consequently, since the subchannel allocation is time-consuming, the communication throughput of the user terminal is lowered.

In the above-described case, the communication throughout corresponding to QoS cannot be provided to a user terminal.

The present invention has been made to solve the above-described problem, and an object of the invention is to obtain an OFDMA communication system, base station, and communication method that can continue communication without lowering the throughput of communication in a user terminal even when transmission data is decreased temporarily and then increased again while communication of the user terminal is in progress and can provide the throughput corresponding to QoS to the user terminal.

### Unit for Solving the Problem

To solve the above-described problem, according to an aspect of the present invention, there is provided an OFDMA communication system as defined in claim 1.

According to another aspect of the present invention, there is provided an OFDMA base station as defined in claim 4.

According to another aspect of the present invention, there is provided a channel allocation method as defined in claim 6.

### Advantage of the Invention

According to the present invention, when an amount of communication data between a base station and a terminal in which communication has been established has decreased, allocation is maintained without releasing at least one of a plurality of data-free subchannels and allocation to another terminal is not performed. When the terminal communication has increased again, the throughput corresponding to QoS can be provided to a user terminal without lowering the communication throughput.

### Brief Description of the Drawings

Fig. 1 is an illustrative diagram showing an OFDM frame configuration to be used in a communication method according to an exemplary embodiment of the present invention.
Fig. 2 is a block diagram of a base station of a communication system according to the exemplary embodiment of the present invention.
Fig. 3 is a diagram showing an extra subchannel allocation maintaining flow in a base station of a communication system according to the exemplary embodiment of the present invention.
Fig. 4 is a sequence diagram in a communication system according to the exemplary embodiment of the present invention.
Fig. 5 is a diagram showing an extra subchannel allocation maintaining time in the sequence of Fig- 4.
Fig. 6 is a sequence diagram of a communication method when QoS is not considered.
Fig. 7 is a block diagram showing a configuration of a conventional OFDM modulation device to be used at a transmitting side.
Fig- 8 is an illustrative diagram showing a guard interval.
Fig. 9 is a block diagram showing a configuration of a conventional OFDM. modulation device to be used at a receiving side.

### Description of Reference Numerals and Signs

1: BASE STATION
11: WIRELESS COMMUNICATION UNIT
12: SIGNAL PROCESSING UNIT
13: MODEM UNIT
14: EXTERNAL I/F UNIT
15: CONTROL UNIT
15-1: ESCH (EXTRA SUBCHANNEL) SETTING UNIT
15-2: ESCH (EXTRA SUBCHANNEL) ALLOCATION MAINTAINING CONTROL UNIT
15-3: INVALID SIGNAL (DISAPPROVAL-INDICATING SIGNAL) GENERATION UNIT
15-4: QoS CLASS ACQUISITION UNIT
16: STORAGE UNIT

### Best Mode for Carrying Out the Invention

Hereinafter, an exemplary embodiment of a communication system according to the present invention will be described in detail with reference to the drawings.

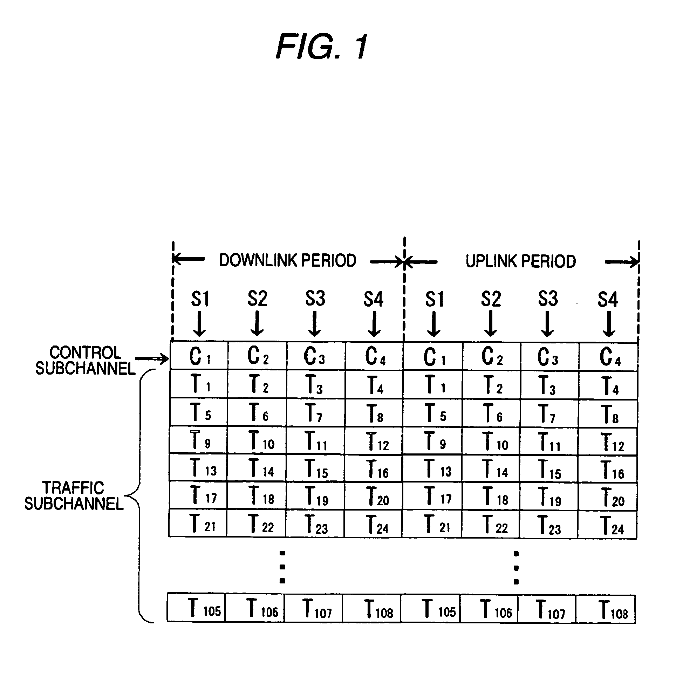

Fig. 1 is an illustrative diagram showing an OFDMA frame configuration to be used in a communication method according to an embodiment of the present invention.
This communication system is an OFDMA communication system for performing communication by a frame configured by a plurality of subchannels for each frequency band between a base station (CS: cell station) and a plurality of terminals (PS: personal station).

For example, the frame configuration of Fig. 1 is a configuration of the case of four time slots (S1 to S4) used in a conventional PHS system. The vertical axis denotes the frequency axis and the horizontal axis denotes the time axis.
In Fig. 1, both a downlink period and an uplink period are divided into 28 frequency bands with respect to the frequency axis. A subchannel capable of being allocated to the first frequency band is called a control subchannel and used in a control channel (CCH).
The above-described first frequency band can be the highest frequency band or the lowest frequency band. The control subchannel indicates which subchannel of each time slot is used in each frequency band.

The example of Fig. 1 is an example of the PHS system and the number of base stations capable of being designated by control subchannels C1 to C4 is 4. In the PHS system, a control channel is intermittently transmitted every 100 ms.

In the remaining 27 frequency bands, traffic subchannels T1 to T108 for transmitting and receiving data are configured and a total of 108 subchannels are configured since 27 subchannels are configured in the frequency direction and 4 subchannels are configured in the time-axis direction.
The traffic subchannels are configured by anchor subchannels and extra subchannels.

The anchor subchannel is a subchannel used to provide each terminal with a notification indicating which user uses which subchannel or used for the base station and the terminal to negotiate whether data has been accurately exchanged in retransmission control.

The extra subchannel is a subchannel for transmitting data to be used actually, and an arbitrary plurality of extra subchannels can be allocated to one terminal. In this case, as the number of allocated extra subchannels increases, high-speed communication is possible since a band extends.

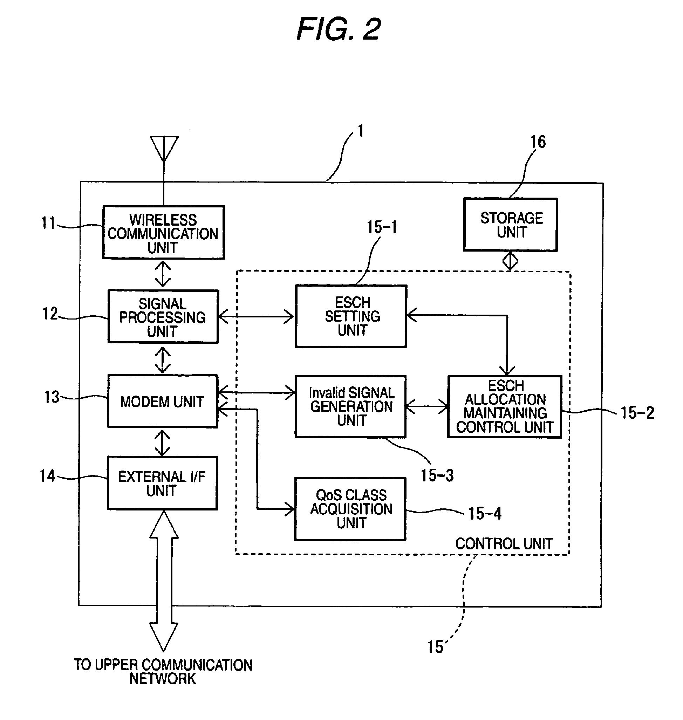

Next, a configuration of a base station to be used in this communication system will be described. Fig. 2 is a block diagram of a base station of a communication system according to the exemplary embodiment of the present invention.
As shown in Fig. 2, a base station 1 is configured by a wireless communication unit 11 for converting a signal from a later-described signal processing unit 12 connected to an antenna into an RF signal or performing conversion so that the signal processing unit 12 can process a received RF signal, the signal processing unit 12 for processing a received signal or a signal to be transmitted, a modem unit 13 for modulating or demodulating a signal, an external I/F unit 14 connected to an upper level communication network, a control unit 15 for controlling the signal processing unit 12 and the modem unit 13, and a storage unit 16 for storing QoS information, etc.

The control unit 15 acquires a communication data amount (a communication data amount acquisition unit) and allocates subchannels according to the communication data amount (a channel allocation unit). When the communication, data amount has decreased, control is performed to maintain at least one of the allocated subchannels.
Thus, the control unit 15 has an ESCH (extra subchannel) setting unit 15-1 for setting allocation for each terminal of an extra subchannel (ESCH) to be used by communication, an ESCH allocation maintaining control unit 15-2 for commanding the ESCH (extra subchannel) setting unit 15-1 to release an extra subchannel and commanding an invalid signal (disapproval-indicating signal) generation unit 15-3 to maintain extra subchannel allocation, by determining whether or not to start allocation maintaining of an extra subchannel without transmission data, the invalid signal (disapproval-indicating signal) generation unit 15-3 for generating an invalid signal (disapproval-indicating signal) in a V field of a PHY frame of an extra subchannel, and a QoS class acquisition unit 15-4 for acquiring information about a QoS class of the user from the storage unit 16.

In the communication system according to the exemplary embodiment of the present invention, a determination as to whether or not to continue a subchannel connection is performed by a difference in the degree of occupancy of the extra subchannel (ESCH) on the basis of QoS information of the terminal.
Thereby, the throughput corresponding to the QoS information can be provided to the user.
QoS (Quality of Service) is a function for reserving a specific communication band and guaranteeing the quality of seamless data transmission.

A QoS class included in the QoS information is a class divided according to a communication priority, and, for example, can be classified into three types of streaming, file transmission, and best effort. The streaming is a class in which the delay or stop of communication such as a real-time distribution of voice or video, a video-phone call, etc. is not allowed, and is set to class 1 whose priority is highest.
The file transmission is a class that is good when a degree of band for an electronic file is secured and is set to class 2 whose priority is lower than that of the streaming.
The best effort is a class in which QoS is not guaranteed and is set to class 3 whose priority is lowest.

An extra subchannel allocation maintaining flow in the base station of the OFDMA communication system according to the exemplary embodiment of the present invention will be described.

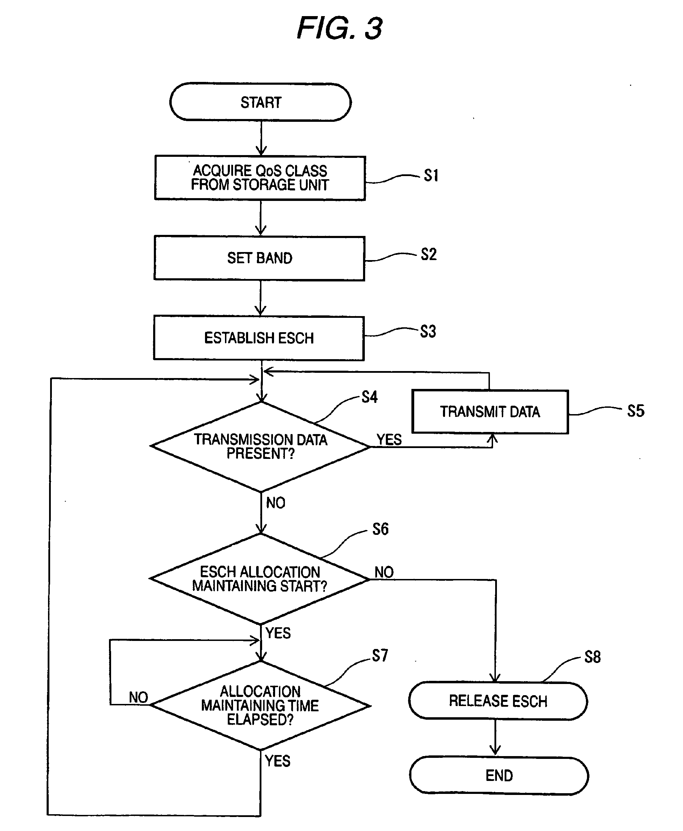

Fig. 3 is a diagram showing an extra subchannel allocation maintaining flow in the base station of the communication system according to the exemplary embodiment of the present invention.
- The allocation maintaining flow is started.
- The QoS class acquisition unit 15-4 of the base station 1 acquires information about a QoS class of a user from the storage unit 16 (step S1).
- The control unit 15 sets a communication band according to the acquired QcS class (step S2). For example, when it is classified into three types of classes (classes 1 to 3), a communication band to be allocated to class 1 with the highest priority is set to the broadest band. A communication band to be allocated to class 2 with the second highest priority is set to an intermediate level band. A communication band to be allocated to class 3 with the lowest priority is set to the narrowest band.
- The ESCH setting unit 15-1 establishes communication by setting allocation for every terminal of an extra subchannel (ESCH) to be used by the communication (step S3).
- The ESCH allocation maintaining control unit 15-2 determines whether or not transmission data is present within each extra subchannel which is being used by communication between the base station and the terminal (step 54), and data transmission is continued directly (step S5) in the case of the extra subchannel determined to have transmission data (Y of step S4).
- In the case of the extra subchannel without transmission data (N of step S4), the ESCH allocation maintaining control unit 15-2 determines whether or not to start the allocation maintaining of the extra subchannel (step S6), and commands the ESCH setting unit 15-1 to release the extra subchannel when it is determined that the allocation maintaining is not started (step S8), and terminates the allocation maintaining flow.
- When it is determined that the allocation maintaining is started (Y of step S6), a command is sent to the invalid signal (disapproval-indicating signal) generation unit 15-3 and an invalid signal (disapproval-indicating signal) is contained end transmitted in a V field of a PHY frame, so that a data-free extra subchannel is transmitted continuously (the allocation is maintained). The control unit 15 determines whether a predetermined allocation maintaining time has elapsed (step S7) and returns to the process of step S4 when the allocation maintaining time has elapsed (Y of step S7).

Whether to release an extra subchannel without transmission data or maintain its allocation determines the number of extra subchannels to be released and the number of extra subchannels for maintaining the allocation according to the QoS class. For example, when it is classified into the above-described three types of classes (classes 1 to 3), class 1 releases no extra subchannel, class 2 releases a half of extra subchannels, and class 3 releases a quarter of extra subchannels.

When the extra subchannel allocation is maintained, an allocation maintaining time is changed according to the QoS class. For example, when it is classified into the three types of classes (classes 1 to 3), a predetermined allocation maintaining time is allocated so that t1 > t2 > t3, where the allocation maintaining time of class 1 is t1, the allocation maintaining time of class 2 is t2, and the allocation maintaining time of class 3 is t3.

Preferably, a released subchannel is allocated to an extra subchannel without being allocated to an anchor subchannel of another terminal. This is because the anchor subchannel is not released until a communication connection is terminated, for example, even though a transmission data amount has decreased when it is allocated to the anchor subchannel of the other terminal, but there is a possibility that it may be released again in the case of the extra subchannels.

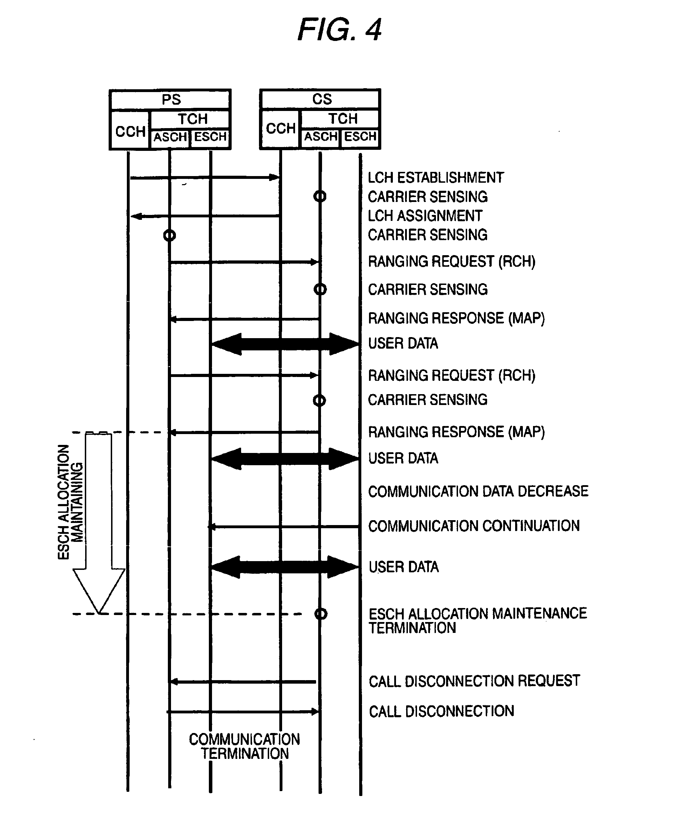

A communication method according to the exemplary embodiment of the present invention will be described in detail using the sequence of a communication procedure between a terminal and a base station shown in Fig. 4 when QoS is considered.

Types of subchannels (a control channel (CCH) and an anchor subchannel (ASCH) and an extra subchannel (ESCH) configuring a traffic channel (TCH)) to be communicated in a terminal (PS) and a base station (CS) are divided and shown.

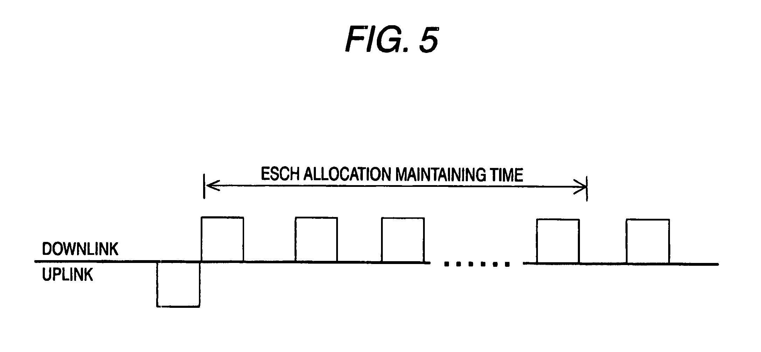

This communication method continuously sends a signal from the base station to the terminal for a given time even when user data decreases temporarily and prevents the base station from allocating the extra subchannel (ESCH) to another terminal. As shown in Fig 5, the downlink (link from the base station to the terminal) is transmitted continuously, so that the terminal also recognizes that its extra subchannel has been allocated and the extra subchannel is not allocated to another terminal.

In Fig. 4, there are shown the communication start (terminal-base station connection) to the communication termination (terminal-base station release).

### (1-1) Connection Procedure

At a connection time, a connection is made in the same sequence as that of an existing PHS system.
- A link channel (LCH) establishment (decision) signal is transmitted by the control channel (CCH) from the terminal to the base station.
- Carrier sensing is performed in the base station.
- A link channel (LCH) assignment (allocation) signal is transmitted by the control channel (CCH) from the base station to the terminal.
- Carrier sensing is performed in the terminal.
As described above, before an anchor subchannel (ASCH) connection, the carrier sensing is surely performed in both the base station and the terminal. Thereby, the control of a stable band can be used.

### (1-2) Extra Subchannel Allocation and Communication Establishment

When an unused subchannel as the extra subchannel (ESCH) is allocated to the terminal, carrier sensing is performed.
- A ranging request (band setting request) is transmitted by the anchor subchannel (ASCH) from the terminal to the base station in an RCH field.
The extra subchannel (ESCH) request/allocation signal is transmitted through the anchor subchannel (ASCH).
- Carrier sensing is performed in the base station.
- A ranging response (band setting) is transmitted by the anchor subchannel (ASCH) in a MAP field from the base station to the terminal.
- User data transmission/reception between the base station and the terminal is started.
- A ranging request (band setting request) is transmitted by the anchor subchannel (ASCH) in an RCH field from the terminal to the base station.
- Carrier sensing is performed in the base station. Since an unused subchannel as the extra subchannel (ESCH) is allocated to the terminal when the extra subchannel (ESCH) is added, carrier sensing is performed.

### (1-3) Extra Subchannel (ESCH) Allocation Maintaining

- A ranging response (band setting) is transmitted by the anchor subchannel (ASCH) in a MAP field from the base station to the terminal.
- User data is transmitted/received between the base station and the terminal.
In the case where communication data has decreased when the user data is transmitted/received, "Invalid" which is a disapproval-indicating signal is contained in a V field of the anchor subchannel and continuously transmitted from the terminal to the base station (communication continuation). At this time, allocation is continuously maintained without releasing the extra subchannel (ESCH).
At this time, the number of extra subchannels to be released and the number of extra subchannels for maintaining the allocation are determined according to the QoS class. When the extra subchannels allocation is maintained, the allocation maintaining time is changed according to the QoS class.
When data has increased again, user data is transmitted using the above-described extra subchannel (ESCH) whose allocation is continuously maintained without being released.

### (1-4) Communication Termination

- A communication channel (TCH) release request is performed by the control channel (CCH) from the base station to the terminal.
Communication is terminated by a call disconnection.

Next, a sequence of an OFDMA communication method when QoS is not considered will be described as a comparative example.

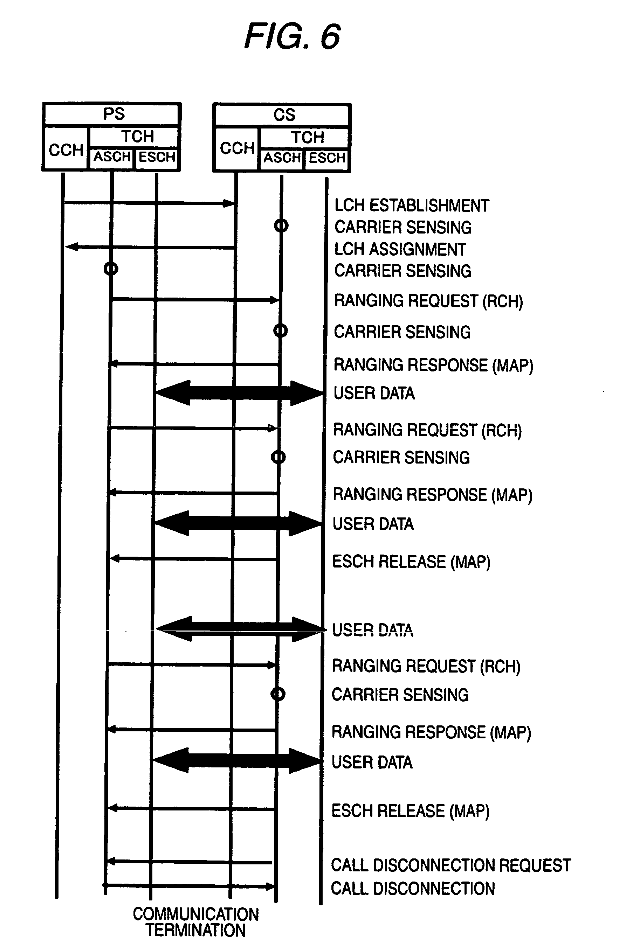

Fig. 6 is an illustrative diagram showing a flow from the communication start (terminal-base station connection) to the communication termination (terminal-base station release) when communication is performed without considering QoS.

### (2-1) Connection Procedure

At a connection time, a connection is made in the same sequence as that of an existing PHS system.
- A link channel (LCH) establishment (decision) signal is transmitted by the control channel (CCH) from the terminal to the base station.
- Carrier sensing is performed in the base station.
- A link channel (LCH) assignment (allocation) signal is transmitted by the control channel (CCH) from the base station to the terminal.
- Carrier sensing is performed in the terminal.
As described above, before an anchor subchannel (ASCH) connection, the carrier sensing is surely performed in both the base station and the terminal. Thereby, the control of a stable band can be used.

### (2-2) Extra Subchannel Allocation and Communication Establishment

- A ranging request (band setting request) is transmitted by the anchor subchannel (ASCH) in an RCH field from the terminal to the base station.
A band setting signal, that is, an extra subchannel (ESCH) request/allocation signal, is transmitted through the anchor subchannel (ASCH).
- Carrier sensing of the anchor subchannel (ASCH) of the base station is performed.
- A ranging response (band setting) is transmitted by the anchor subchannel (ASCH) in a MAP field from the base station to the terminal.
- User data is transmitted/received between the base station and the terminal.
- A ranging request (band setting request) is transmitted by the anchor subchannel (ASCH) in an RCH field from the terminal to the base station.
- Carrier sensing of the anchor subchannel (ASCH) of the base station is performed.
- A ranging response (band setting) is transmitted by the anchor subchannel (ASCH) in a MAP field from the base station to the terminal.
- User data is transmitted/received between the base station and the terminal.

### (2-3) Extra Subchannel (ESCH) Release

- The terminal is notified that the extra subchannel (ESCH) has been released using the MAP of the anchor subchannel (ASCH) from the base station to the terminal. At this time, the terminal does not continue the downlink transmission (from the base station to the terminal) on the released extra subchannel (ESCH).
- User data is transmitted/received between the base station and the terminal.
- A ranging request (band setting request) is transmitted by the anchor subchannel (ASCH) in an RCH field from the terminal to the base station.
- Since the base station allocates an unused subchannel as the extra subchannel even when the released extra subchannel (ESCH) is allocated on the basis of a band addition request, carrier sensing of the anchor subchannel (ASCH) of the base station is performed.
When communication is performed without considering QoS, carrier sensing is needed upon addition of the extra subchannel (ESCH).
- A ranging response (band setting) is transmitted by the anchor subchannel (ASCH) in a MAP field from the base station to the terminal.
- User data is transmitted/received between the base station and the terminal.

### (2-4) Communication Termination

- A communication channel (TCH) release request is performed by the control channel (CCH) from the base station to the terminal.
Communication is terminated by a call disconnection.

Priority is claimed on Japanese Patent Application No. 2006-254386, filed September 20, 2006.

## Claims

1. An OFDMA communication system for performing data communication using one or more subchannels (T1-T108) between a base station (CS) and a plurality of terminals (PS), comprising:
a communication data amount acquisition unit (15) that acquires a communication data amount; and
a channel allocation unit (15) that allocates the subchannels (T1-T108) according to the communication data amount,
**characterised in that** when the communication data amount has decreased, the channel allocation unit (15) maintains allocation of at least one subchannel of the allocated subchannels (T1-T108),
wherein the channel allocation unit (15) transmits a predetermined signal using the subchannel whose allocation is maintained, and
wherein the predetermined signal is a disapproval-indicating signal.

2. The communication system according to claim 1,
wherein the channel allocation unit (15) determines the number of subchannels (T1-T108) for maintaining the allocation according to a priority of the terminal (PS).

3. The communication system according to claim 2,
wherein the priority Is a QoS class.

4. An OFDMA base station (CS) for performing data communication with a plurality of terminals (PS) using one or more subchannels (T1-T108), comprising:
a communication data amount acquisition unit (15) that acquires a communication data amount for a terminal (PS) in which communication has been established; and
a channel allocation unit (15) that allocates the subchannels (T1-T108) to the terminal (PS) In which the communication has been established according to the communication data amount,
**characterised in that** when a communication data amount for the terminal (PS) in which the communication has been established has decreased, the channel allocation unit (15) maintains allocation of at least one subchannel of the allocated subchannels (T1-T108) and continues communication with the terminal (PS) in which the communication has been established,
wherein the channel allocation unit (15) transmits a predetermined signal using the subchannel whose allocation is maintained, and
wherein the predetermined signal is a disapproval-indicating signal.

5. The base station (CS) according to claim 4,
wherein the channel allocation unit (15) determines the number of subchannels (T1-T108) for maintaining the allocation according to a priority of the terminal (PS) in which the communication has been established.

6. A channel allocation method in an OFDMA communication system for performing data communication using one or more subchannels (T1-T108) between a base station (CS) and a plurality of terminals (PS), comprising:
a communication data amount acquisition step of acquiring a communication data amount; and
a channel allocation step of allocating the subchannels (T1-T108) according to the communication data amount,
**characterised in that** when the communication data amount has decreased, the channel allocation step maintains allocation of at least one subchannel of the allocated subchannels (T1-T108),
wherein the channel allocation step transmits a predetermined signal using the subchannel whose allocation is maintained, and
wherein the predetermined signal is a disapproval-indicating signal.

## Patentansprüche

1. OFDMA-Kommunikationssystem zum Ausführen einer Datenkommunikation unter Verwendung eines oder mehrerer Unterkanäle (T1-T108) zwischen einer Basisstation (CS) und mehreren Endgeräten (PS), das umfasst:
eine Kommunikationsdatenmengen-Ermittlungseinheit (15), die eine Kommunikationsdatenmenge ermittelt; und
eine Kanalzuweisungseinheit (15), die die Unterkanäle (T1-T108) in Übereinstimmung mit der Kommunikationsdatenmenge zuweist,
**dadurch gekennzeichnet, dass** dann, wenn die Kommunikationsdatenmenge abgenommen hat, die Kanalzuweisungseinheit (15) die Zuweisung wenigstens eines Unterkanals der zugewiesenen Unterkanäle (T1-T108) aufrecht erhält,
wobei die Kanalzuweisungseinheit (15) ein vorgegebenes Signal unter Verwendung des Unterkanals, dessen Zuweisung aufrecht erhalten wird, sendet und
wobei das vorgegebene Signal ein Genehmigungsverweigerungs-Anzeigesignal ist.

2. Kommunikationssystem nach Anspruch 1,
wobei die Kanalzuweisungseinheit (15) die Anzahl von Unterkanälen (T1-T108), für die die Zuweisung aufrecht erhalten werden soll, in Übereinstimmung mit einer Priorität des Endgeräts (PS) bestimmt.

3. Kommunikationssystem nach Anspruch 2,
wobei die Priorität eine QoS-Klasse ist.

4. OFDMA-Basisstation (CS) zum Ausführen einer Datenkommunikation mit mehreren Endgeräten (PS) unter Verwendung eines oder mehrerer Unterkanäle (T1-T108), die umfasst:
eine Kommunikationsdatenmengen-Ermittlungseinheit (15), um eine Kommunikationsdatenmenge für ein Endgerät (PS), in dem eine Kommunikation aufgebaut worden ist, zu ermitteln; und
eine Kanalzuweisungseinheit (15), um die Unterkanäle (T1-T108) zu dem Endgerät (PS), in dem die Kommunikation aufgebaut worden ist, in Übereinstimmung mit der Kommunikationsdatenmenge zuzuweisen,
**dadurch gekennzeichnet, dass** dann, wenn eine Kommunikationsdatenmenge für das Endgerät (PS), in dem die Kommunikation aufgebaut worden ist, abgenommen hat, die Kanalzuweisungseinheit (15) die Zuweisung wenigstens eines Unterkanals der zugewiesenen Unterkanäle (T1-T108) aufrecht erhält und die Kommunikation mit dem Endgerät (PS), in dem die Kommunikation aufgebaut worden ist, fortsetzt,
wobei die Kanalzuweisungseinheit (15) ein vorgegebenes Signal unter Verwendung des Unterkanals, dessen Zuweisung aufrecht erhalten wird, sendet und
wobei das vorgegebene Signal ein Genehmigungsverweigerungs-Anzeigesignal ist.

5. Basisstation (CS) nach Anspruch 4,
wobei die Kanalzuweisungseinheit (15) die Anzahl von Unterkanälen (T1-T108), für die die Zuweisung aufrecht erhalten werden soll, in Übereinstimmung mit einer Priorität des Endgeräts (PS), in dem die Kommunikation aufgebaut worden ist, bestimmt.

6. Kanalzuweisungsverfahren in einem OFDMA-Kommunikationssystem zum Ausführen einer Datenkommunikation unter Verwendung eines oder mehrerer Unterkanäle (T1-T108) zwischen einer Basisstation (CS) und mehreren Endgeräten (PS), das umfasst:
einen Kommunikationsdatenmengen-Ermittlungsschritt, um eine Kommunikationsdatenmenge zu ermitteln; und
einen Kanalzuweisungsschritt, um die Unterkanäle (T1-T108) in Übereinstimmung mit der Kommunikationsdatenmenge zuzuweisen,
**dadurch gekennzeichnet, dass** dann, wenn die Kommunikationsdatenmenge abgenommen hat, der Kanalzuweisungsschritt die Zuweisung wenigstens eines Unterkanals der zugewiesenen Unterkanäle (T1-T108) aufrecht erhält,
wobei der Kanalzuweisungsschritt ein vorgegebenes Signal unter Verwendung des Unterkanals, dessen Zuweisung aufrecht erhalten wird, sendet und
wobei das vorgegebene Signal ein Genehmigungsverweigerungs-Anzeigesignal ist.

## Revendications

1. Système de communication OFDMA pour effectuer une communication de données en utilisant un ou plusieurs sous-canaux (T1-T108) entre une station de base (CS) et une pluralité de terminaux (PS), comprenant :
une unité d'acquisition de quantité de données de communication (15) qui acquiert une quantité de données de communication ; et
une unité d'attribution de canaux (15) qui attribue les sous-canaux (T1-T108) selon la quantité de données de communication,
**caractérisé en ce que** lorsque la quantité de données de communication a diminué, l'unité d'attribution de canaux (15) maintient l'attribution d'au moins un sous-canal des sous-canaux attribués (T1-T108),
dans lequel l'unité d'attribution de canaux (15) transmet un signal prédéterminé en utilisant le sous-canal dont l'attribution est maintenue, et
dans lequel le signal prédéterminé est un signal d'indication de désapprobation.

2. Système de communication selon la revendication 1,
dans lequel l'unité d'attribution de canaux (15) détermine le nombre de sous-canaux (T1-T108) pour maintenir l'attribution selon une priorité du terminal (PS).

3. Système de communication selon la revendication 2,
dans lequel la priorité est une classe QoS.

4. Station de base OFDMA (CS) pour effectuer une communication de données avec une pluralité de terminaux (PS) en utilisant un ou plusieurs sous-canaux (T1-T108), comprenant :
une unité d'acquisition de quantité de données de communication (15) qui acquiert une quantité de données de communication pour un terminal (PS) dans lequel une communication a été établie ; et
une unité d'attribution de canaux (15) qui attribue les sous-canaux (T1-T108) au terminal (PS) dans lequel la communication a été établie selon la quantité de données de communication,
**caractérisée en ce que** lorsqu'une quantité de données de communication pour le terminal (PS) dans lequel la communication a été établie a diminué, l'unité d'attribution de canaux (15) maintient l'attribution d'au moins un sous-canal des sous-canaux attribués (T1-T108) et continue la communication avec le terminal (PS) dans lequel la communication a été établie,
dans laquelle l'unité d'attribution de canaux (15) transmet un signal prédéterminé en utilisant le sous-canal dont l'attribution est maintenue, et
dans laquelle le signal prédéterminé est un signal d'indication de désapprobation.

5. Station de base (CS) selon la revendication 4,
dans laquelle l'unité d'attribution de canaux (15) détermine le nombre de sous-canaux (T1-T108) pour maintenir l'attribution selon une priorité du terminal (PS) dans lequel la communication a été établie.

6. Procédé d'attribution de canaux dans un système de communication OFDMA pour effectuer une communication de données en utilisant un ou plusieurs sous-canaux (T1-T108) entre une station de base (CS) et une pluralité de terminaux (PS), comprenant :
une étape d'acquisition de quantité de données de communication consistant à acquérir une quantité de données de communication ; et
une étape d'attribution de canaux consistant à attribuer les sous-canaux (T1-T108) selon la quantité de données de communication,
**caractérisé en ce que** lorsque la quantité de données de communication a diminué, l'étape d'attribution de canaux maintient l'attribution d'au moins un sous-canal des sous-canaux attribués (T1-T108),
dans lequel l'étape d'attribution de canaux transmet un signal prédéterminé en utilisant le sous-canal dont l'attribution est maintenue, et
dans lequel le signal prédéterminé est un signal d'indication de désapprobation.
